# EUROPÄISCHE PATENTSCHRIFT

(11) **EP 1 944 548 B1**
(45) Veröffentlichungstag und Bekanntmachung des Hinweises auf die Patenterteilung: **02.04.2014**
(21) Anmeldenummer: 08000229.8
(22) Anmeldetag: 08.01.2008
(51) Int. Cl.: F23N 5/14, F23N 5/24

(54) **Verfahren zum Betreiben eines Fahrzeugheizgerätes in einer Startphase**
Method for operating a heating device for a motor vehicle in the start phase
Procédé destiné au fonctionnement d'un appareil de chauffage de véhicule en phase de démarrage

(30) Priorität: 12.01.2007 DE 102007001836
(43) Veröffentlichungstag der Anmeldung: 16.07.2008
(73) Patentinhaber: Eberspächer Climate Control Systems GmbH & Co. KG, 73730 Esslingen (DE)
(72) Erfinder: Köberle, Christoph, 70736 Fellbach (DE); Knies, Tobias, 73240 Wendlingen (DE); Epple, Jürgen, 72135 Dettenhausen (DE); Pfister, Wolfgang, 73732 Esslingen (DE)
(74) Vertreter: Ruttensperger, Bernhard

(56) Entgegenhaltungen:
- EP-A1- 0 271 999
- EP-A2- 0 892 215
- DE-A1- 3 736 690
- DE-A1- 4 433 210
- DE-A1- 4 446 829

## Beschreibung

Die vorliegende Erfindung betrifft ein Verfahren zum Betreiben eines Fahrzeugheizgerätes in einer Startphase.

Ein derartiges beispielsweise als Zuheizer oder Standheizung in einem Fahrzeug eingesetztes brennstoffbetriebenes Heizgerät umfasst einen Brennerbereich, in welchem ein Brennstoff/Luft-Gemisch erzeugt und verbrannt wird. Die Verbrennungsprodukte, im Allgemeinen also die Verbrennungsabgase, strömen entlang eines Abgasströmungsweges zu einem Abgasauslass. Es ist eine Wärmetauscheranordnung vorgesehen. Diese ist mit einem inneren Wärmetauschergehäuse und einem äußeren Wärmetauschergehäuse aufgebaut. Das innere Wärmetauschergehäuse begrenzt wenigstens bereichsweise den Abgasströmungsweg, so dass die die Verbrennungswärme transportierenden Verbrennungsabgase durch den direkten Kontakt mit dem inneren Wärmetauschergehäuse Wärme auf dieses übertragen. Das äußere Wärmetauschergehäuse begrenzt zusammen mit dem im Verbrennungsbetrieb erwärmten inneren Wärmetauschergehäuse einen Strömungsraum für zu erwärmendes Medium. Dieses tritt in einem Eintrittsbereich in den Strömungsraum ein und tritt in einem Austrittsbereich aus dem Strömungsraum aus. Derartiges zu erwärmendes Medium kann beispielsweise ein flüssiges Medium sein, wie z. B. Wasser bzw. das auch durch eine Brennkraftmaschine zirkulierende Kühlmittel.

Um Information über den Verbrennungsstatus im Brennerbereich zu erhalten, ist ein Flammfühler vorgesehen, welcher eine im Zusammenhang mit dem Verbrennungsstatus im Brennerbereich stehende erste Messgröße generiert. Weiterhin ist ein Überhitzungsfühler vorgesehen, welcher eine im Zusammenhang mit einer Temperatur im Bereich des inneren Wärmetauschergehäuses stehende zweite Messgröße erzeugt. Ein Regelfühler erzeugt eine dritte Messgröße, die mit einer Temperatur des zu erwärmenden Mediums im Zusammenhang steht.

Bei derartigen Fahrzeugheizgeräten kann beispielsweise vorgesehen sein, dass der Flammfühler mit einer PTC-Widerstandscharakteristik ausgebildet ist, während der Überhitzungsfühler und/oder der Regelfühler eine NTC-Widerstandscharakteristik aufweisen. Dies bedeutet also, dass ein als Flammfühler eingesetzter Temperatursensor eine derartige Temperatur-Widerstands-Charakteristik aufweist, dass mit ansteigender Temperatur auch der elektrische Widerstand dieses Sensors ansteigt. Im Falle des Überhitzungsfühlers und des Regelfühlers weisen die hierfür jeweils eingesetzten Temperatursensoren eine genau gegenläufige Temperatur-WiderstandsCharakteristik auf. Das heißt, mit steigender Temperatur fällt deren elektrischer Widerstand. Dies bedeutet, dass der Überhitzungsfühler und der Regelfühler bei vergleichsweise niedrigen Temperaturen einen sehr hohen elektrischen Widerstand aufweisen werden. Wird bei derartigem Aufbau am Beginn oder vor Beginn des Verbrennungsbetriebs die Funktion der Fühler überprüft, so besteht die Gefahr, dass durch den vergleichsweise hohen elektrischen Widerstand der mit NTC-Charakteristik ausgebildeten Sensorelemente des Überhitzungsfühlers bzw. des Regelfühlers eine Leitungsunterbrechung und somit eine Störung erkannt wird, obgleich dies tatsächlich nicht der Fall ist. Um dies zu vermeiden, kann beispielsweise so vorgegangen werden, dass jedes derart aufgebaute System, das eine Ansteuervorrichtung und einen zugeordneten Überhitzungsfühler bzw. Regelfühler umfasst, vor Inbetriebnahme das System eingemessen wird, um auch unter Berücksichtigung von im Fertigungsbetrieb auftretenden Schwankungen der Widerstandscharakteristik eine fehlerhafte Erkennung tatsächlich nicht vorliegender Störzustände vermeiden zu können. Da dies also bei jedem einzelnen aufgebauten Heizgerät vorgenommen werden muss, ist ein großer Aufwand involviert.

Ein Verfahren zum Betreiben eines Fahrzeugheizgerätes ist im DE4446829 beschrieben.

Es ist die Aufgabe der vorliegenden Erfindung, ein Verfahren zum Betreiben eines Fahrzeugheizgerätes in einer Startphase bereitzustellen, bei welchem in einfacher, gleichwohl zuverlässiger Art und Weise die Funktionalität verschiedener auch mit NTC-Widerstandscharakteristik arbeitender Temperaturfühler überprüft werden kann.

Gemäß der vorliegenden Erfindung wird diese Aufgabe gelöst durch ein Verfahren zum Betreiben eines Fahrzeugheizgerätes in einer Startphase, welches Fahrzeugheizgerät umfasst einen Brennerbereich zur Verbrennung eines Brennstoff/Luft-Gemisches, einen Abgasströmungsweg, entlang welchem die Verbrennungsabgase zu einem Abgasauslass strömen, eine Wärmetauscheranordnung mit einem inneren Wärmetauschergehäuse und einem äußeren Wärmetauschergehäuse, wobei das innere Wärmetauschergehäuse wenigstens bereichsweise den Abgasströmungsweg begrenzt und wobei das innere Wärmetauschergehäuse mit dem äußeren Wärmetauschergehäuse einen Strömungsraum für zu erwärmendes Medium begrenzt, wobei das zu erwärmende Medium in einem Eintrittsbereich in den Strömungsraum eintritt und in einem Austrittsbereich aus dem Strömungsraum austritt, einen Flammfühler zur Erzeugung einer mit dem Verbrennungsstatus im Brennerbereich im Zusammenhang stehenden ersten Messgröße, einen Überhitzungsfühler zur Erzeugung einer mit einer Temperatur im Bereich des inneren Wärmetauschergehäuses im Zusammenhang stehenden zweiten Messgröße, einen Regelfühler zur Erzeugung einer mit einer Temperatur des zu erwärmenden Mediums im Zusammenhang stehenden dritten Messgröße, wobei der Flammfühler eine PTC-Widerstandscharakteristik aufweist und der Überhitzungsfühler oder/und der Regelfühler eine NTC-Widerstandscharakteristik aufweisen.

Das Verfahren umfasst die folgenden Maßnahmen:
a) Überprüfen, ob die erste Messgröße eine über einer ersten Temperaturschwelle liegende Temperatur im Bereich des Flammfühlers indiziert,
b) dann, wenn die erste Messgröße eine über der ersten Temperaturschwelle liegende Temperatur im Bereich des Flammfühlers indiziert, Durchführen einer Funktionsüberprüfung des Überhitzungsfühlers oder/und des Regelfühlers vor oder beim Starten des Verbrennungsbetriebs,
c) dann, wenn die erste Messgröße eine nicht über der ersten Temperaturschwelle liegende Temperatur im Bereich des Flammfühlers indiziert, Starten des Verbrennungsbetriebs ohne Durchführung einer Funktionsüberprüfung des Überhitzungsfühlers oder/und des Regelfühlers.

Bei dem erfindungsgemäßen Verfahren wird also zunächst beruhend auf der ersten Messgröße, also der durch den Flammfühler gelieferten Messgröße, ausgewertet, in welchem Bereich die Temperatur liegt. Das der Flammfühler mit einer PTC-Widerstandscharakteristik ausgebildet ist, wird er vor allem bei vergleichsweise niedrigen Umgebungstemperaturen einen sehr geringen Widerstandswert aufweisen, so dass hier eine zuverlässige Erkennung dahingehend möglich ist, in welchem Bereich die Temperatur tatsächlich liegt. Indiziert die erste Messgröße eine Temperatur, die über einer ersten Temperaturschwelle liegt, wird auch die Funktionsüberprüfung des Überhitzungsfühlers bzw. des Regelfühlers durchgeführt. In diesem Falle kann also angenommen werden, dass durch die über einer bestimmten ersten Schwelle liegende Temperatur der Widerstandswert des/der mit NTC-Charakteristik ausgestalteten Fühler so weit gesunken ist, dass eine fehlerhafte Erkennung einer Leitungsunterbrechung durch einen zu hohen Widerstandswert nicht erfolgen wird. Indiziert jedoch die durch den Flammfühler gelieferte erste Messgröße eine Temperatur, die nicht über der ersten Temperaturschwelle liegt, also vergleichsweise nieder ist und die Gefahr mit sich bringt, dass aufgrund des in diesem Zustand zu hohen elektrischen Widerstandes eines mit NTC-Charakteristik arbeitenden Fühlers nicht zuverlässig erkannt werden kann, ob diese korrekt arbeiten, wird die Durchführung einer Funktionsüberprüfung unterdrückt. Das fehlerhafte Erkennen eines tatsächlich nicht vorliegenden Störzustandes, wie z. B. einer Leitungsunterbrechung, kann somit vermieden werden.

Um auch bei der erfindungsgemäßen Vorgehensweise die korrekte Funktion des Überhitzungsfühlers bzw. auch des Regelfühlers überprüfen bzw. sicherstellen zu können, wird weiter vorgeschlagen, dass die Maßnahme c) nach dem Starten des Verbrennungsbetriebs die Überprüfung umfasst, ob die erste Messgröße eine über einer zweiten Temperaturschwelle liegende Temperatur im Bereich des Flammfühlers indiziert, wobei dann, wenn die erste Messgröße eine über der zweiten Temperaturschwelle liegende Temperatur im Bereich des Flammfühlers indiziert, die Funktionsprüfung des Überhitzungsfühlers oder/und des Regelfühlers durchgeführt wird. Da nach dem Starten des Verbrennungsbetriebs die verschiedenen Systembereiche eines derartigen Fahrzeugheizgeräts sich allmählich erwärmen sollten und somit auch in denjenigen Bereichen, in welchen der Überhitzungsfühler und der Regelfühler angeordnet sind, die Temperaturen so weit steigen sollten, dass in Verbindung mit der bei zumindest einem dieser Fühler implementierten NTC-Charakteristik Widerstandswerte erreicht werden, die eine zuverlässige Unterscheidung eines Zustands mit hohem, aber definiertem elektrischen Widerstand und eines Zustands mit mangelnder Leifähigkeit, beispielsweise aufgrund eines Kabelbruchs, ermöglichen.

Führt dabei die fortgesetzte Überwachung der ersten Messgröße zu der Erkenntnis, dass auch eine vorbestimmte Zeitdauer nach dem Starten des Verbrennungsbetriebs diese erste Messgröße keine über der zweiten Temperaturschwelle liegende Temperatur im Bereich des Flammfühlers indiziert, so wird das Vorliegen einer Störung erkannt. Eine derartige Störung kann verschiedene Aspekte betreffen. Zum einen könnte die Verbrennung nicht korrekt ablaufen, so dass eine erwartete Erwärmung tatsächlich nicht stattfinden kann. Zum anderen könnte im Bereich des Flammfühlers ein technisches Problem vorliegen, so dass dieser trotz korrekt ablaufender Verbrennung und damit ansteigender Temperatur nicht das erwartete Signal liefern kann.

Die zweite Temperaturschwelle liegt vorzugsweise über der ersten Temperaturschwelle, so dass auf diese Art und Weise auch klar unterschieden werden kann beispielsweise zwischen einem Zustand, in dem keine Verbrennung stattfindet, und einem Zustand mit korrekt ablaufender Verbrennung.

Die Funktionsprüfung des Überhitzungsfühlers kann eine Überprüfung umfassen, ob die zweite Messgröße eine über einer dritten Temperaturschwelle liegende Temperatur im Bereich des Überhitzungsfühlers indiziert, wobei dann, wenn die zweite Messgröße nicht das Vorliegen einer über der dritten Temperaturschwelle liegenden Temperatur im Bereich des Überhitzungsfühlers indiziert, eine Störung erkannt wird. Dabei kann die dritte Temperaturschwelle kleiner oder gleich der zweiten Tempraturschwelle sein.

Weiterhin kann die Funktionsprüfung des Regelfühlers die Überprüfung umfassen, ob die dritte Messgröße eine über einer vierten Temperaturschwelle liegende Temperatur im Bereich des Regelfühlers indiziert, wobei dann, wenn die dritte Messgröße nicht das Vorliegen einer über der vierten Temperaturschwelle liegenden Temperatur im Bereich des Regelfühlers indiziert, eine Störung erkannt wird. Hier kann die vierte Tempraturschwelle kleiner oder gleich der dritten Temperaturschwelle sein.

Führen die verschiedenen Funktionsüberprüfungen dazu, dass keine Störung vorliegt, so kann gemäß einem weiteren Aspekt der Erfindung eine Überhitzungsschwelle aktiviert werden und eine Überprüfung durchgeführt werden, ob die zweite Messgröße eine über der Überhitzungsschwelle liegende Temperatur im Bereich des Überhitzungsfühlers indiziert, wobei dann, wenn die zweite Messgröße eine über der Überhitzungsschwelle liegende Temperatur im Bereich des Überhitzungsfühlers indiziert, das Vorliegen einer Störung erkannt wird. Auf diese Art und Weise kann überprüft bzw. sichergestellt werden, dass ein ausreichender Wärmeabtrag aus dem Bereich der Wärmetauscheranordnung stattfindet.

Weiter kann bei erkannter korrekter Funktion der verschiedenen Temperaturfühler eine Differenzschwelle für die Differenz zwischen einer durch die zweite Messgröße indizierten Temperatur im Bereich des Überhitzungsfühlers und einer durch die dritte Messgröße indizierten Temperatur im Bereich des Regelfühlers aktiviert werden, und es kann eine Überprüfung durchgeführt werden, ob diese Differenz über der ihr zugeordneten Differenzschwelle liegt. lndiziert dieser Vergleich bzw. diese Überprüfung das Überschreiten der Differenzschwelle, so kann ebenfalls auf Vorliegen einer Störung erkannt werden. Eine zu große Temperaturdifferenz zwischen dem Bereich, in welchem der Überhitzungsfühler angeordnet ist, und dem Bereich, in welchem der Regelfühler angeordnet ist, deutet darauf hin, dass der Strömungsraum nicht oder nicht ausreichend mit dem zu erwärmenden Medium gefüllt ist, welches primär auch für einen Temperaturübertrag auf den Regelfühler verantwortlich ist.

Die vorliegende Erfindung wird nachfolgend mit Bezug auf die beiliegenden Figuren beschrieben. Es zeigt:
- Fig. 1: eine Prinzipansicht eines Fahrzeugheizgeräts, bei welchem das erfindungsgemäße Verfahren implementiert sein kann;
- Fig. 2: ein Diagramm, welches den elektrischen Widerstand über der Temperatur für eine NTC-Charakteristik und eine PTC-Charakteristik darstellt;
- Fig. 3: ein Diagramm, welches den elektrischen Strom aufgetragen über der Temperatur für eine NTC-Charakteristik und eine PTC-Charakteristik darstellt;
- Fig. 4: ein Diagramm, welches für verschiedene Betriebszustände den Zusammenhang zwischen der durch den Flammfühler erfassten Temperatur und der durch den Überhitzungsfühler bzw. den Regelfühler erfassten Temperatur zeigt.

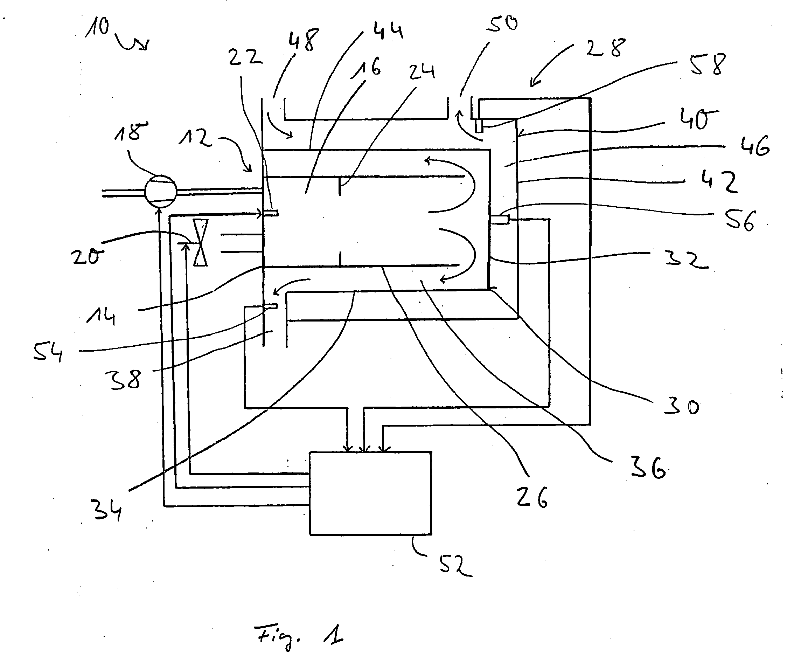

In Fig. 1 ist ein Fahrzeugheizgerät allgemein mit 10 bezeichnet. Dieses Fahrzeugheizgerät umfasst einen Brennerbereich 12 mit einer in einem Wärmetauschergehäuse 14 gebildeten Brennkammer 16. In dieser Brennkammer 16 wird durch eine Brennstoffförderanordnung 18, beispielsweise durch eine Dosierpumpe, flüssiger Brennstoff eingespeist. Durch eine Verbrennungsluftförderanordnung 20, beispielsweise ein Seitenkanalgebläse, wird Verbrennungsluft eingespeist. In der Brennkammer 16 wird dann ein Gemisch aus Brennstoff und Verbrennungsluft gebildet, das durch ein Zündorgan 22, beispielsweise einen Glühzündstift, gezündet und dann verbrannt werden kann. Die bei dieser Verbrennung in der Brennkammer 16 entstehenden Verbrennungsabgase treten beispielsweise über eine Flammblende 24 in ein Flammrohr 26 ein und strömen entlang diesem.

Der Brennerbereich 12, d. h. das Brennkammergehäuse 14 und auch das darauf folgende Flammrohr 26 sind umgeben von einer Wärmetauscheranordnung 28. Diese umfasst ein inneres Wärmetauschergehäuse 30 mit einer Bodenwandung 32 und einer Umfangswandung 34. Die aus dem Flammrohr 26 austretenden Verbrennungsabgase treffen auf die Bodenwandung 32 auf, werden nach radial außen umgelenkt und strömen entlang eines zwischen dem Flammrohr 26 und der Umfangswandung 34 gebildeten Abgasströmungswegs 36 zu einem Abgasauslass 38. Dort können die Abgase in ein Abgasreinigungssystem abgegeben werden.

Ein äußeres Wärmetauschergehäuse 40 ist ebenfalls mit einer Bodenwandung 42 und einer Umfangswandung 44 ausgebildet und umgibt das innere Wärmetauschergehäuse 30. Auf diese Art und Weise ist zwischen dem inneren Wärmetauschergehäuse 30 und dem äußeren Wärmetauschergehäuse 40 ein Strömungsraum 46 für ein zu erwärmendes Medium, beispielsweise Wasser, gebildet. Dieses tritt in einem Eintrittsbereich 48 in den Strömungsraum 46 ein, strömt, geleitet durch verschiedene Strömungsführungselemente, beispielsweise in schraubenförmiger um das innere Wärmetauschergehäuse 30 und gelangt zu einem Austrittsbereich 50.

Die Brennstoffförderanordnung 18, die Luftförderanordnung 20 und auch das Zündorgan 22 stehen unter der Ansteuerung einer Ansteuervorrichtung 52.

Diese steuert beruhend auf verschiedenen Vorgaben den Betrieb dieser Systembereiche, um für den Ablauf einer korrekten Verbrennung in der Brennkammer 16 zu sorgen. Die Ansteuervorrichtung 52 erhält als diesem Betrieb zugrunde zu legende Parameter unter anderem die Angaben von verschiedenen Temperaturfühlern. So ist im Abgasströmungsweg 36, beispielsweise im oder nahe dem Abgasauslass 38 ein Flammfühler 54 angeordnet. Dieser Flammfühler 54 wird durch die Verbrennungsabgase umströmt und erzeugt somit als Ausgangssignal eine erste Messgröße, die in unmittelbarem Zusammenhang mit dem Verbrennungsstatus in der Brennkammer 16 steht. Ein Überhitzungsfühler 56 ist beispielsweise an der Bodenwandung 32 des inneren Wärmetauschergehäuses 30 angeordnet und liefert somit als Ausgangssignal eine Messgröße, die mit der Temperatur im Bereich des inneren Wärmetauschergehäuses in direktem Zusammenhang steht. Diese Temperatur wird beeinflusst sein einerseits durch einen Wärmeeintrag an der Innenseite des inneren Wärmetauschergehäuses 30 und andererseits durch den Wärmeabtrag an der Außenseite desselben, nämlich durch das im Strömungsraum 46 strömende zu erwärmende Medium.

Ein Regelfühler 58 ist beispielsweise im Strömungsraum 46 und vorzugsweise im oder nahe am Austrittsbereich 50 so angeordnet, dass er als Ausgangssignal eine dritte Messgröße liefert, die in direktem Zusammenhang steht mit der Temperatur des zu erwärmenden Mediums.

Auf diese Art und Weise erhält die Ansteuervorrichtung 50 durch die ihr zugeführten Ausgangssignale der verschiedenen Temperaturfühler 54, 56, 58 die dadurch jeweils repräsentierten Messgrößen. Beruhend auf diesen Signalen bzw. Messgrößen und ggf. auch beruhend auf weiteren Betriebsparametern, steuert die Ansteuervorrichtung 52 den Betrieb des Heizgerätes 10.

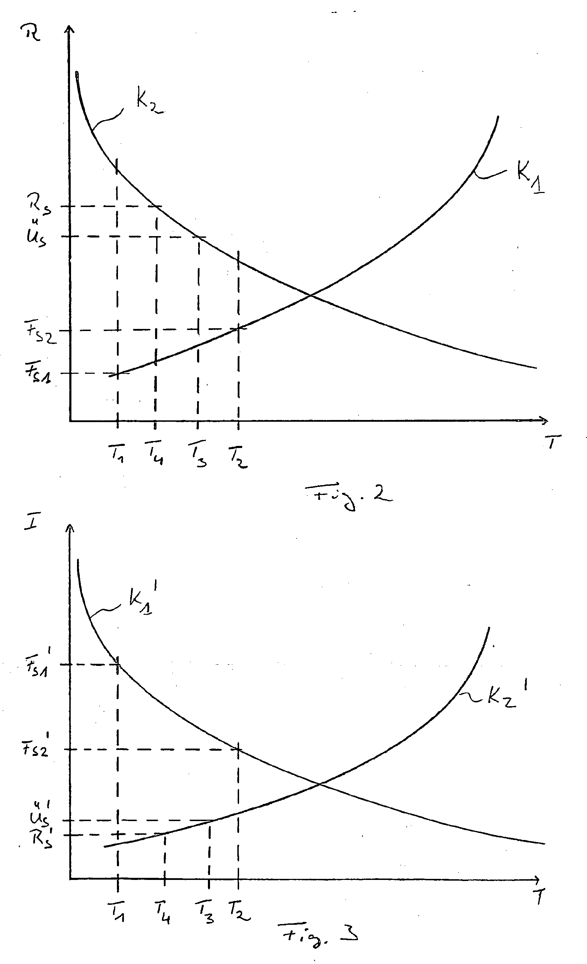

Im Folgenden wird eine Vorgehensweise beschrieben, mit welcher bei der vorliegenden Erfindung in der Startphase die korrekte Funktionalität insbesondere des Überhitzungsfühlers 56 und des Regelfühlers 58 sichergestellt werden kann. Hierbei ist zu berücksichtigen, dass bei dem in Fig. 1 gezeigten Fahrzeugheizgerät 10 der Flammfühler 54 so aufgebaut ist, dass er mit einer PTC-Temperaturcharakteristik arbeitet. Dies bedeutet, dass, wie anhand der Kurve K₁ in Fig. 2 veranschaulicht, der elektrische Widerstand R des Flammfühlers 54 mit steigender Temperatur ansteigt. Der Überhitzungsfühler 56 und der Regelfühler 58 sind mit einer NTC-Charakteristik aufgebaut, d. h. mit steigender Temperatur fällt deren elektrischer Widerstand, wie durch die Kurve K₂ in Fig. 2 veranschaulicht. Es sei hier darauf hingewiesen, dass in Fig. 2 jeweils nur der qualitative Zusammenhang dargestellt ist. Selbstverständlich können die beiden Temperaturfühler 56 und 58 bei im Wesentlichen gleichem qualitativen Lauf tatsächlich unterschiedliche Widerstandswerte liefern. Es sei weiter darauf hingewiesen, dass der bei einem jeweiligen der Temperaturfühler 54, 56 und 58 temperaturabhängig sich einstellende elektrische Widerstand bestimmt werden kann aus einer an diese jeweils angelegten definierten elektrischen Spannung und dem dann gemessenen elektrischen Strom.

Es sei zunächst angenommen, dass das Fahrzeugheizgerät in einem Kaltstartzustand ist, also bei vergleichsweise niedriger Umgebungstemperatur und im nicht vorerwärmten Zustand gestartet wird. In diesem Zustand wird der Flammfühler, wie durch die Kurve K₁ wiedergegeben, einen vergleichsweise kleinen elektrischen Widerstand aufweisen, während der Überhitzungsfühler 56 und der Regelfühler 58 einen vergleichsweise hohen elektrischen Widerstand aufweisen werden. Es wird daher zunächst beruhend auf der durch den Flammfühler 54 gelieferten ersten Messgröße, die also hier tatsächlich einen Widerstandswert darstellen kann, überprüft, ob diese Messgröße über einer ihr zugeordneten ersten Schwelle F_{S1} liegt. Wie man anhand des Diagramms der Fig. 2 erkennt, entspricht diese erste Temperaturschwelle F_{S1} einer Temperatur T1, die beispielsweise -35°C sein kann. Wird erkannt, dass in dieser Phase die erste Messgröße unter der ihr zugeordneten ersten Schwelle F_{S1} liegt, was indiziert, dass die Temperatur unter der Temperatur T1, also beispielsweise -35°C liegt, so wird dies als Anlass dafür genommen, zwar den Verbrennungsbetrieb zu starten, also Brennstoff und Verbrennungsluft in die Brennkammer 16 einzuleiten, jedoch keine Funktionsüberprüfung des Überhitzungsfühlers 56 und des Regelfühlers 58 vorzunehmen.

Würde in diesem Zustand die Funktionalität dieser beiden Temperaturfühler durch Anlegen einer Spannung und Überprüfung der sich ergebenden Widerstands- bzw. Stromflusses durchgeführt werden, so könnte aufgrund des dabei sehr hohen elektrischen Widerstands dieser mit NTC-Charakteristik arbeitenden Temperaturfühler irrtümlicherweise auf einen Defekt, beispielsweise einen Kabelbruch, geschlossen werden, da der nur geringe Stromfluss eine zuverlässige Auswertung nicht zulässt. Erfindungsgemäß wird also in diesem Zustand auf die Durchführung einer Funktionsüberprüfung verzichtet und der Verbrennungsbetrieb gestartet.

Im Laufe des beginnenden Verbrennungsbetriebs wird der Flammfühler 54 durch die im Verbrennungsbetrieb dann entstehenden Verbrennungsabgase allmählich erwärmt. Das heißt, dessen Widerstand wird, wie durch die Kurve K₁ veranschaulicht, mit der zunehmenden Verbrennung auch ansteigen, was eine entsprechend ansteigende Temperatur auch der Verbrennungsabgase indiziert. Mit der startenden Verbrennung werden die auf die Bodenwandung 32 des inneren Wärmetauschergehäuses 30 auftreffenden Verbrennungsabgase auch diese Bodenwandung 32 und somit auch den Überhitzungsfühler 56 allmählich erwärmen. Auch wird dabei das im Strömungsraum 46 strömende zu erwärmende Medium erwärmt werden, so dass auch der Regelfühler 58 allmählich erwärmt wird. Diese mit einem gewissen Zeitversatz auftretende Erwärmung der beiden Temperaturfühler 56 und 58 führt zu einem durch die Kurve K₂ in Fig. 2 veranschaulichten Abfall des elektrischen Widerstands R derselben. Dies nutzt die vorliegende Erfindung dadurch, dass nach dem Starten des Verbrennungsbetriebs wiederholt die durch das Ausgangssignal des Flammfühlers 54 gelieferte erste Messgröße überprüft wird, und zwar dahingehend, ob sie über einer zweiten Temperaturschwelle F_{S2} liegt. Diese zweite Temperaturschwelle F_{S2} ist einer Temperatur T₂ zugeordnet, die beispielsweise bei +50°C liegen kann. Liegt also die erste Messgröße, also z. B. der Widerstandswert R des Flammfühlers 54 über der zugeordneten zweiten Schwelle F_{S2}, was indiziert, dass die Temperatur des Flammfühlers 54 und mithin auch die Temperatur der ihn erwärmenden Verbrennungsabgase über der Temperatur T₂ liegen, wird erfindungsgemäß dann angenommen, dass auch eine derartige Erwärmung im Bereich des Überhitzungsfühlers 56 und im Bereich des Regelfühlers 58 stattgefunden hat, dass eine korrekte und zuverlässige Funktionsüberprüfung derselben möglich ist. Indiziert also die erste Messgröße das Überschreiten einer zweiten Temperaturschwelle T₂, so wird dann auch eine Funktionsüberprüfung des Überhitzungsfühlers 56 und des Regelfühlers 58 beispielsweise jeweils durch Anlegen einer definierten Spannung und durch Auswerten des dann fließenden elektrischen Stroms durchgeführt.

Die Funktionsprüfung des Überhitzungsfühlers 56 kann beispielsweise so durchgeführt werden, dass überprüft wird, ob die durch diesen gelieferte zweite Messgröße unter einer ihr zugeordneten Schwelle Ü_{S} liegt, was indiziert, dass die Temperatur im Bereich des Überhitzungsfühlers 56 über einer dieser Überhitzungsschwelle Ü_{S} zugeordneten dritten Temperaturschwelle T₃ liegt. Ist dies der Fall, so wird entschieden, dass der Überhitzungsfühler 56 korrekt arbeitet und kein Störfall vorliegt. Liegt jedoch trotz zu erwartender ausreichender Temperatur im Bereich des Überhitzungsfühlers die durch diesen gelieferte Messgröße, also der Widerstandswert, über der zugeordneten Überhitzungsschwelle Ü_{S}, was an sich bedeuten würde, dass die dadurch indizierte Temperatur unter der dritten Temperaturschwelle T₃ liegen würde, so wird das Vorliegen einer Störung im Bereich des Überhitzungsfühlers 56 erkannt, da, beruhend auf der ersten Messgröße, also dem vom Flammfühler 54 gelieferten Messsignal bzw. Temperaturwert, zuverlässig darauf geschlossen werden kann, dass auch im Bereich des Überhitzungsfühlers 56 eine ausreichend hohe Temperatur vorliegen müsste. Dieser Störzustand kann beispielsweise angezeigt werden oder/und dazu genutzt werden, eine Sicherheitsabschaltung vorzunehmen.

Eine entsprechende Funktionsüberprüfung kann dann auch beim Regelfühler 58 vorgenommen werden. Auch hier kann also überprüft werden, ob die von ihm gelieferte dritte Messgröße über oder unter einer ihr zugeordneten Schwelle R_{S} liegt, was indiziert, dass die dadurch repräsentierte Temperatur unter bzw. über einer vierten Temperaturschwelle T₄ liegt. Wird erkannt, dass die dritte Messgröße unter der ihr zugeordneten Schwelle R_{S} liegt, was also darauf hindeutet, dass die Temperatur im Bereich des Regelfühlers 58 über der vierten Temperaturschwelle T₄ liegt, so wird auf korrekte Funktionalität des Regelfühlers 58 erkannt. Liegt jedoch die dritte Messgröße nicht unter der ihr zugeordneten Schwelle Rs, was indiziert, dass entgegen der Annahme die Temperatur im Bereich des Regelfühlers unter der vierten Temperaturschwelle T₄ liegt, wird ebenfalls auf das Vorliegen einer Störung entschieden und beispielsweise eine entsprechende Warnung oder/und Sicherheitsabschaltung ausgelöst.

Eine weitere Störung kann dann erkannt werden, wenn nach dem Starten des Verbrennungsbetriebs aus einem Zustand, in welchem aufgrund der ersten Messgröße zunächst darauf geschlossen wurde, dass die Temperatur unter der ersten Temperatuschwelle T₁ liegt, die fortgesetzte Überwachung der ersten Messgröße innerhalb einer vorgegebenen Zeit nicht zu der an sich erwartenden Erwärmung im Bereich des Flammfühlers 54 führt. Dies ist ein Indiz dafür, dass entweder eine Störung im Bereich des Flammfühlers 54 selbst vorliegt, so dass dieser nicht die im Zusammenhang mit der durch die Verbrennung zu erwartenden Temperatur stehende erste Messgröße liefert, oder dass Probleme bei der Verbrennung selbst aufgetreten sind, also beispielsweise kein Brennstoff oder keine Verbrennungsluft geliefert werden oder das Zündorgan 22 nicht zur Zündung geführt hat. Auch in diesem Falle kann eine entsprechende Störung angezeigt werden oder/und ggf. eine Sicherheitsabschaltung vorgenommen werden.

Grundsätzlich kann jedoch auch der Fall eintreten, dass die Verbrennung gestartet werden soll, also das Fahrzeugheizgerät 10 in Betrieb genommen werden soll, wenn die Umgebungstemperatur und somit auch die Temperatur der verschiedenen Systembereiche des Fahrzeugheizgeräts 10 bereits in einem Bereich liegen, die auch eine zuverlässige Funktionsüberprüfung der mit NTC-Charakteristik arbeitenden Temperaturfühler 56 und 58 zulässt. Dies bedeutet, dass bei der anfänglichen Überprüfung der ersten Messgröße erkannt wird, dass diese über der ihr zugeordneten ersten Schwelle F_{S1} liegt, was indiziert, dass die Temperatur über der ersten Temperaturschwelle T₁ liegt. In diesem Falle kann die Funktionsüberprüfung für den Überhitzungsfühler 56 und auch den Regelfühler 58 wieder in der vorangehend beschriebenen Art und Weise vorgenommen werden. Dabei kann es jedoch vorteilhaft sein, für die zweite Messgröße und die dritte Messgröße andere Schwellen Ü_{S} und R_{S} zu setzen, als in Fig. 2 gezeigt. Es muss nämlich in diesem Zustand auch der Fall berücksichtigt werden, dass die Temperatur des Gesamtsystems bei bzw. nur geringfügig über der ersten Temperaturschwelle T₁ liegt. Dies bedeutet, dass auch die Temperatur im Bereich des Überhitzungsfühlers 56 und des Regelfühlers 58 bei diesem Wert liegt. Eine Auswahl höherer Werte für die dritte Temperaturschwelle T₃ und die vierte Temperaturschwelle T₄ bzw. entsprechend zugeordneten Schwellenwerten für die zweite Messgröße und die dritte Messgröße würde dann zur Folge haben, dass beim Überhitzungsfühler 56 bzw. beim Regelfühler 58 fälschlicherweise eine Störung erkannt wird.

Es sollten daher die dritte Temperaturschwelle T₃ und die vierte Temperaturschwelle T₄ und selbstverständlich die damit in direktem Zusammenhang stehenden Schwellen Ü_{S} und R_{S} immer so gewählt werden, dass sie unter demjenigen Temperaturschwellenwert bzw. dem jeweils zugeordneten Schwellenwert für die erste Messgröße liegen, der die Funktionsprüfung ausgelöst hat. Im ersteren Beispiel, also demjenigen Beispiel, in welchem das Überschreiten der zweiten Temperaturschwelle T₂ die Funktionsprüfung ausgelöst hat, liegen die dritte Temperaturschwelle T₃ und die vierte Temperaturschwelle T₄ also höchstens bei dieser zweiten Temperaturschwelle T₂, was selbstverständlich auch eine entsprechende Lage der Schwellen Ü_{S} und R_{S} im Verhältnis zur Schwelle F_{S2} bedeutet. In dem Falle, in welchem das Überschreiten der ersten Temperaturschwelle T₁ bereits die Funktionsprüfung auslöst, liegen die dritte Temperaturschwelle T₃ und die vierte Temperaturschwelle T₄ also maximal bei dieser ersten Temperaturschwelle T₁, was wiederum eine entsprechende Zuordnung der Schwellenwerte Ü_{S} und R_{S} zum Schwellenwert F_{S1} bedeutet. Weiterhin kann noch vorgesehen sein, dass die vierte Temperaturschwelle T₄ bei einem niedrigeren Wert liegt, als die dritte Temperaturschwelle T₃, da im Allgemeinen die Temperatur im Bereich des Regelfühlers 58 bei niedrigeren Werten liegen wird, als die Temperatur im Bereich des Überhitzungsfühlers 56.

Vorangehend wurde die erfindungsgemäß durchzuführende Startphase mit Bezug auf die Verwendung der Widerstandswerte der jeweiligen Temperaturfühler 54, 56, 58 als die jeweilige Messgröße erläutert, die dann jeweils einen direkten Rückschluss auf die in den verschiedenen Systembereichen vorliegenden Temperaturen liefern. Es ist selbstverständlich, dass auch andere physikalische Größen als derartige Messgrößen genutzt werden können. So ist in Fig. 3 jeweils mit den Kurven K_{1'} und K_{2'} der elektrische Strom aufgetragen, der bei definierter angelegter Spannung jeweils in Abhängigkeit von der Temperatur fließen wird. Ein Temperaturfühler mit PTC-Charakteristik, wie anhand der Kurve K₁ in Fig. 2 erläutert, wird einen temperaturabhängigen Stromfluss aufweisen, wie er durch die Kurve K_{1'} in Fig. 3 gezeigt ist. Das heißt, bei vergleichsweise niedrigen Temperaturen wird ein sehr hoher Strom fließen, während bei höheren Temperaturen aufgrund des ansteigenden elektrischen Widerstands R der Stromfluss abnimmt. Umgekehrt verhält sich der Stromfluss bei einem NTC-Temperaturfühler. Dort wird mit zunehmender Temperatur aufgrund des abnehmenden Widerstands R der Stromfluss ansteigen. Auch hier können dann in Zuordnung zu dem vorangehend erläuternden Temperaturschwellenwerten T₁, T₂, T₃ und T₄ entsprechende Schwellenwerte für die erste Messgröße, also den am Flammfühler 54 fließenden elektrischen Strom gesetzt werden, nämlich die Schwellenwerte F_{S1'} und F_{S2'}. Man erkennt hier, dass nunmehr der zweite Schwellenwert F_{S2'} aufgrund der Strom-Temperatur-Charakteristik unter dem ersten Schwellenwert F_{S1'} liegt. Entsprechendes gilt dann für die in Zuordnung zur Kurve-K_{2'} ausgewählten Schwellenwerte Ü_{S'} und R_{S'}, welche der dritten Temperaturschwelle T₃ bzw. vierten Temperaturschwelle T₄ zugeordnet sind. Entsprechend wird auch durch die umgekehrten qualitativen Zusammenhänge nunmehr zwischen den jeweiligen Messgrößen und den zugeordneten Schwellenwerten das Überschreiten in der anderen Richtung zu einem bestimmten Entscheidungsergebnis führen. Das heißt, liegt beispielsweise die erste Messgröße, also der am Flammfühler 54 vorhandene Stromfluss, über der zugeordneten ersten Schwelle F_{S1'}, so indiziert dies eine unter der ersten Temperaturschwelle T₁ liegende Temperatur.

Es sei darauf hingewiesen, dass selbstverständlich auch die Temperatur selbst als derartige Messgröße verwendet werden könnte, nämlich dadurch, dass jeweils unter Berücksichtigung der PTC-Charakteristik oder der NTC-Charakteristik der verschiedenen Temperaturfühler 54, 56, 58 ein sich bei Anlegen einer elektrischen Spannung einstellender Stromfluss umgesetzt wird in eine bestimmte zugeordnete Temperatur, ggf. mit einem Zwischenschritt, in welchem der elektrische Widerstand ermittelt wird. Von Bedeutung ist jedoch, dass völlig unabhängig davon, welche der physikalischen Größen elektrischer Widerstand, elektrischer Strom oder Temperatur als Messgröße betrachtet und bei der weiteren Auswertung berücksichtigt wird, in jedem Fall der vorangehend erläuterte Zusammenhang bestehen wird und die Möglichkeit besteht, eine Funktionsüberprüfung insbesondere der mit NTC-Charakteristik arbeitenden Temperaturfühler nur dann vorzunehmen, wenn diese einen ausreichend geringen elektrischen Widerstand haben, um zuverlässig zwischen einem korrekten Zustand und einem fehlerhaften Zustand unterscheiden zu können.

Ist mit der erfindungsgemäßen Vorgehensweise dann für den Überhitzungsfühler 56 und den Regelfühler 58 die Funktionsprüfung durchgeführt worden und ist bei keinem dieser Temperaturfühler eine Störung erkannt worden, so kann für den dann folgenden Verbrennungsbetrieb weiterhin eine Überhitzungsschwelle für die vom Überhitzungsfühler 56 gelieferte zweite Messgröße aktiviert werden. Auch hier sei darauf hingewiesen, dass dies wieder völlig unabhängig davon erfolgen kann, welche der vorangehend erläuterten physikalischen Größen als jeweilige Messgröße betrachtet bzw. verwendet wird. Beispielsweise kann die Überhitzungsschwelle so gesetzt werden, dass das Überschreiten einer Temperatur von 115°C im Bereich des Überhitzungsfühlers 56 als Störung, also als Überhitzungsfall, erkannt wird. Weiterhin kann nach Erkennen eines korrekten Betriebs des Überhitzungsfühlers 56 und des Regelfühlers 58 eine Differenzschwelle gesetzt werden, welche der Differenz zwischen der im Bereich des Überhitzungsfühlers 56 vorhandenen Temperatur und der im Bereich des Regelfühlers 58 vorhandenen Temperatur zugeordnet ist. Auch hier kann die Differenz, die dann mit der zugeordneten Differenzschwelle zu vergleichen ist, wieder völlig unabhängig davon ermittelt werden, welche der vorangehend erläuterten physikalischen Größe als Messgröße berücksichtigt wird.

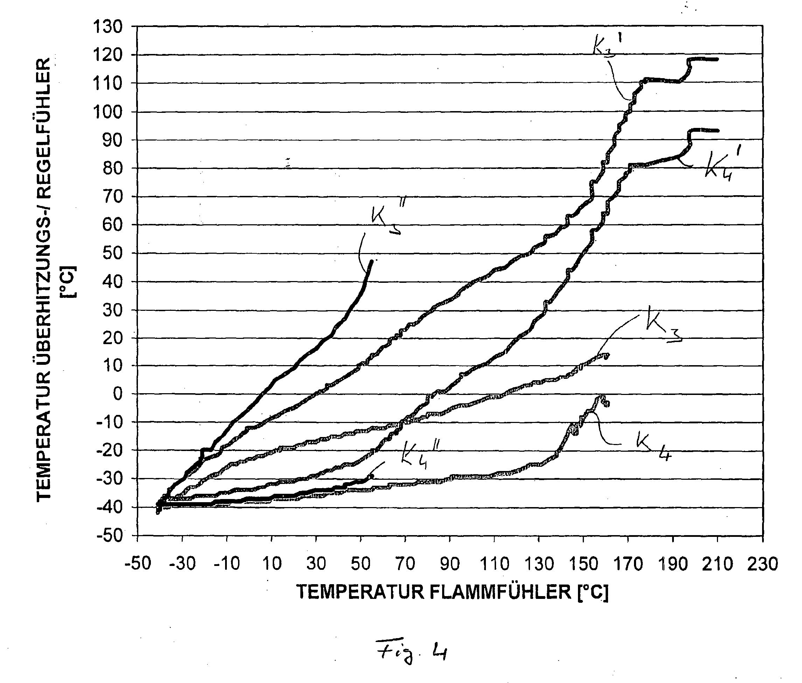

Die Auswirkung des Aktivierens der Überhitzungsschwelle einerseits und der Differenzschwelle andererseits wird nachfolgend mit Bezug auf die Fig. 4 erläutert.

In dieser Fig. 4 sind für drei verschiedene Betriebszustände die jeweils im Bereich des Überhitzungsfühlers 56 und die im Bereich des Regelfühlers 58 vorhandenen Temperaturen aufgetragen. So repräsentiert die Kurve K₃ die Temperatur im Bereich des Überhitzungsfühlers 56 bei normalem, korrektem Betrieb des Fahrzeugheizgeräts 10. Die Kurve K₄ repräsentiert die im Bereich des Regelfühlers 58 vorliegende Temperatur, die, wie vorangehend bereits erläutert, immer etwas unter der Temperatur im Bereich des Überhitzungsfühlers 56 liegen wird. Man erkennt anhand der Kurven K₃ und K₄, dass für einen normalen Verbrennungsbetrieb diese näherungsweise den gleichen Verlauf aufweisen werden, ohne übermäßigen Anstieg und ohne eine übermäßig groß werdende Differenz.

Die Kurven K_{3'} und K_{4'} repräsentieren wiederum die Temperaturen im Bereich des Überhitzungsfühlers 56 und des Regelfühlers 58, nunmehr jedoch für den Fall, dass das im Strömungsraum 56 vorhandene zu erwärmende Medium nicht zirkuliert. Das heißt, das Medium wird sich vergleichsweise stark erwärmen, und aufgrund der Tatsache, dass kein Wärmeabtransport stattfindet, wird sowohl im Bereich des Überhitzungsfühlers 56, als auch im Bereich des Regelfühlers 58 ein sehr starker Temperaturanstieg zu erkennen sein. Ist dann, wie vorangehend erläutert, beispielsweise eine Überhitzungsschwelle von z. B. 115°C gesetzt, was selbstverständlich eine entsprechende Auswahl eines Schwellenwertes für die jeweils ausgewählte Messgröße bedeutet, so kann dann, wenn diese Überhitzungsschwelle der im Bereich des Überhitzungsfühlers 56 vorliegenden Temperatur überschritten wird, auf Vorliegen einer Störung erkannt werden und ein entsprechendes Signal generiert werden bzw. eine Sicherheitsabschaltung erfolgen.

Die Kurven K_{3"} und K_{4"} zeigen einen anderen fehlerhaften Zustand, nämlich denjenigen Zustand, in welchem bei ablaufender Verbrennung der Strömungsraum 46 nicht oder nicht ausreichend mit zu erwärmendem Medium gefüllt ist. Dies bedeutet, dass zwar im Bereich des Überhitzungsfühlers 56 eine vergleichsweise hohe Temperatur erfasst wird, dass jedoch kein Wärmeübertrag auf den Regelfühler 58 stattfindet. Die Wärme wird also aus dem Bereich des Überhitzungsfühlers 56 nicht abgetragen, so dass dort ein übermäßig starker Anstieg stattfinden wird und die Abweichung von der Temperatur des Regelfühlers 58 ebenso stark zunehmen wird. Ist hier beispielsweise eine Differenzschwelle von 70°C gesetzt, was entsprechend wieder eine Differenzschwelle bei den jeweiligen Messgrößen bedeutet, so kann das Vorliegen einer derartigen Störung erkannt werden und beispielsweise ein Störungssignal erzeugt werden oder/und eine Sicherheitsabschaltung erfolgen.

## Patentansprüche

1. Verfahren zum Betreiben eines Fahrzeugheizgerätes in einer Startphase, welches Fahrzeugheizgerät umfasst:
- einen Brennerbereich (12) zur Verbrennung eines Brennstoff/LuftGemisches,
- einen Abgasströmungsweg (36), entlang welchem die Verbrennungsabgase zu einem Abgasauslass (38) strömen,
- eine Wärmetauscheranordnung (28) mit einem inneren Wärmetauschergehäuse (30) und einem äußeren Wärmetauschergehäuse, (40) wobei das innere Wärmetauschergehäuse (30) wenigstens bereichsweise den Abgasströmungsweg (36) begrenzt und wobei das innere Wärmetauschergehäuse (30) mit dem äußeren Wärmetauschergehäuse (40) einen Strömungsraum (46) für zu erwärmendes Medium begrenzt, wobei das zu erwärmende Medium in einem Eintrittsbereich (48) in den Strömungsraum (46) eintritt und in einem Austrittsbereich (50) aus dem Strömungsraum (46) austritt,
- einen Flammfühler (54) zur Erzeugung einer mit dem Verbrennungsstatus im Brennerbereich (12) im Zusammenhang stehenden ersten Messgröße,
- einen Überhitzungsfühler (56) zur Erzeugung einer mit einer Temperatur im Bereich des inneren Wärmetauschergehäuses (30) im Zusammenhang stehenden zweiten Messgröße,
- einen Regelfühler (58) zur Erzeugung einer mit einer Temperatur des zu erwärmenden Mediums im Zusammenhang stehenden dritten Messgröße,
wobei der Flammfühler (54) eine PTC-Widerstandscharakteristik aufweist und der Überhitzungsfühler (56) oder/und der Regelfühler (58) eine NTC-Widerstandscharakteristik aufweisen,
wobei das Verfahren die folgenden Maßnahmen umfasst:
a) Überprüfen, ob die erste Messgröße eine über einer ersten Tem-peraturschwelle (T₁) liegende Temperatur im Bereich des Flämmfühlers (54) indiziert,
b) dann, wenn die erste Messgröße eine über der ersten Temperaturschwelle (T₁) liegende Temperatur im Bereich des Flammfühlers (54) indiziert, Durchführen einer Funktionsüberprüfung des Überhitzungsfühlers (56) oder/und des Regelfühlers (58) vor oder beim Starten des Verbrennungsbetriebs,
c) dann, wenn die erste Messgröße eine nicht über der ersten Temperaturschwelle (T₁) liegende Temperatur im Bereich des Flammfühlers (54) indiziert, Starten des Verbrennungsbetriebs ohne Durchführung einer Funktionsüberprüfung des Überhitzungsfühlers (56) oder/und des Regelfühlers (58).

2. Verfahren nach Anspruch 1,
**dadurch gekennzeichnet, dass** die Maßnahme c) nach dem Starten des Verbrennungsbetriebs die Überprüfung umfasst, ob die erste Messgröße eine über einer zweiten Temperaturschwelle (T₂) liegende Temperatur im Bereich des Flammfühlers (54) indiziert, wobei dann, wenn die erste Messgröße eine über der zweiten Temperaturschwelle (T₂) liegende Temperatur im Bereich des Flammfühlers (54) indiziert, die Funktionsprüfung des Überhitzungsfühlers (56) oder/und des Regelfühlers (58) durchgeführt wird.

3. Verfahren nach Anspruch 2,
**dadurch gekennzeichnet, dass** dann, wenn eine vorbestimmte Zeitdauer nach dem Starten des Verbrennungsbetriebs die erste Messgröße keine über der zweiten Temperaturschwelle (T₂) liegende Temperatur im Bereich des Flammfühlers (54) indiziert, das Vorliegen einer Störung erkannt wird.

4. Verfahren nach Anspruch 2 oder 3,
**dadurch gekennzeichnet, dass** die zweite Temperaturschwelle (T₂) über der ersten Temperaturschwelle (T₁) liegt.

5. Verfahren nach einem der Ansprüche 1 bis 4,
**dadurch gekennzeichnet, dass** die Funktionsprüfung des Überhitzungsfühlers (54) die Überprüfung umfasst, ob die zweite Messgröße eine über einer dritten Temperaturschwelle (T₃) liegende Temperatur im Bereich des Überhitzungsfühlers (56) indiziert, wobei dann, wenn die zweite Messgröße nicht das Vorliegen einer über der dritten Temperaturschwelle (T₃) liegenden Temperatur im Bereich des Überhitzungsfühlers (56) indiziert, eine Störung erkannt wird.

6. Verfahren nach Anspruch 3 und Anspruch 5,
**dadurch gekennzeichnet, dass** die dritte Temperaturschwelle (T₃) kleiner oder gleich der ersten Temperaturschwelle (T₁) oder zweiten Temperaturschwelle (T₂) ist.

7. Verfahren nach einem der Ansprüche 1 bis 5,
**dadurch gekennzeichnet, dass** die Funktionsprüfung des Regelfühlers (58) die Überprüfung umfasst, ob die dritte Messgröße eine über einer vierten Temperaturschwelle (T₄) liegende Temperatur im Bereich des Regelfühlers (58) indiziert, wobei dann, wenn die dritte Messgröße nicht das Vorliegen einer über der vierten Temperaturschwelle (T₄) liegenden Temperatur im Bereich des Regelfühlers (58) indiziert, eine Störung erkannt wird.

8. Verfahren nach Anspruch 5 und Anspruch 7,
**dadurch gekennzeichnet, dass** die vierte Temperaturschwelle (T₄) kleiner oder gleich der dritten Temperaturschwelle (T₃) ist.

9. Verfahren nach einem der vorangehenden Ansprüche,
**dadurch gekennzeichnet, dass** dann, wenn die Funktionsüberprüfung nicht zur Erkennung einer Störung führt, eine Überhitzungsschwelle aktiviert wird und eine Überprüfung durchgeführt wird, ob die zweite Messgröße eine über der Überhitzungsschwelle liegende Temperatur im Bereich des Überhitzungsfühlers (56) indiziert, wobei dann, wenn die zweite Messgröße eine über der Überhitzungsschwelle liegende Temperatur im Bereich des Überhitzungsfühlers (56) indiziert, das Vorliegen einer Störung erkannt wird.

10. Verfahren nach einem der vorangehenden Ansprüche,
**dadurch gekennzeichnet, dass** dann, wenn die Funktionsüberprüfung nicht zur Erkennung einer Störung führt, eine Differenzschwelle für die Differenz zwischen einer durch die zweite Messgröße indizierten Temperatur im Bereich des Überhitzungsfühlers (56) und einer durch die dritte Messgröße indizierten Temperatur im Bereich des Regelfühlers (58) aktiviert wird und eine Überprüfung durchgeführt wird, ob die Differenz über der Differenzschwelle liegt, wobei dann, wenn die Überprüfung das Überschreiten der Differenzschwelle indiziert, eine Störung erkannt wird.

## Claims

1. A method for operating a vehicle heating device in a starting phase, said vehicle heating device comprising:
- a burner section (12) for the combustion of a fuel/air mixture,
- an exhaust gas flow path (36) along which the combustion gases flow towards an exhaust gas outlet (38),
- a heat exchanger (28) with an internal heat exchanger housing (30) and an external heat exchanger housing (40), the internal heat exchanger housing (30) defining at least partially the exhaust gas flow path (36) and the internal heat exchanger housing (30) defining, together with the external heat exchanger housing (40), a flow space (46) for a medium to be heated, the medium to be heated entering in an inlet region (48) of said flow space (46) and leaving said flow space (46) in an outlet region (50),
- a flame sensor (54) for creating a first parameter associated with the combustion status in the burner section (12),
- an overheating sensor (56) for creating a second parameter associated to a temperature in the region of the internal heat exchanger housing (30),
- a control sensor (58) for creating a third parameter associated to a temperature of the medium to be heated,
said flame sensor (54) having a PTC resistance characteristic and the overheating sensor (56) or/and the control sensor (58) having an NTC resistance characteristic,
the method comprising the following measures:
a) verifying if the first parameter indicates a temperature in the region of the flame sensor (54) exceeding the first temperature threshold (T₁),
b) when the first parameter indicates a temperature in the region of the flame sensor (54) exceeding a first temperature threshold (T₁), carrying out a function check for the overheating sensor (56) or/and the control sensor (58) prior to or during starting combustion operation,
c) when the first parameter indicates a temperature in the region of the flame sensor (54) not exceeding the first temperature threshold (T₁), starting combustion operation without carrying out a function check for the overheating sensor (56) or/and the control sensor (58).

2. The method according to claim 1,
**characterized in that** measure c) after starting combustion operation comprises checking if the first parameter indicates a temperature in the region of the flame sensor (54) exceeding a second temperature threshold (T₂), wherein, when said first parameter indicates a temperature in the region of the flame sensor (54) exceeding the second temperature threshold (T₂), the function check for the overheating sensor (56) or/and the control sensor (58) is carried out.

3. The method according to claim 2,
**characterized in that** when, following a predefined period after the start of combustion operation the first parameter does not indicate a temperature exceeding the second temperature threshold (T₂) in the region of the flame sensor (54), the presence of a failure is detected.

4. The method according to claim 2 or 3,
**characterized in that** the second temperature threshold (T₂) is above the first temperature threshold (T₁).

5. The method according to one of claims 1 to 4,
**characterized in that** the function check for said overheating sensor (56) comprises checking if the second parameter indicates a temperature in the region of the overheating sensor (56) exceeding a third temperature threshold (T₃), wherein, when said second parameter does not indicate a temperature exceeding the third temperature threshold (T₃) in the region of the overheating sensor (56), the presence of a failure is detected.

6. The method according to claim 3 and claim 5,
**characterized in that** the third temperature threshold (T₃) is lower or equal to the first temperature threshold (T₁) or the second temperature threshold (T₂).

7. The method according to one of claims 1 to 5,
**characterized in that** the function check for the control sensor (58) includes checking if the third parameter indicates a temperature in the region of said control sensor (58) exceeding a fourth temperature threshold (T₄), wherein, when the third parameter does not indicate a temperature exceeding the fourth temperature threshold (T₄) in the region of the control sensor (58), the presence of a failure is detected.

8. The method according to claim 5 and claim 7,
**characterized in that** said fourth temperature threshold (T₄) is lower or equal to a third temperature threshold (T₃).

9. The method according to one of the preceding claims,
**characterized in that**, when the function check does not lead to the detection of a failure, an overheating threshold is activated and it is checked if the second parameter indicates a temperature exceeding the overheating threshold in the region of said overheating sensor (56), wherein, when the second parameter indicates a temperature exceeding the overheating threshold in the region of said overheating sensor (56), the presence of a failure is detected.

10. The method according to one of the preceding claims,
**characterized in that**, when said function check does not indicate a failure, a difference threshold for the difference between a temperature in the region of the overheating sensor (56), indicated by the second parameter, and a temperature in the region of the control sensor (58), indicated by the third parameter, is activated and a check is carried out, whether the difference exceeds the difference threshold, wherein, when the check indicates that the difference threshold has been exceeded, the presence of a failure is detected.

## Revendications

1. Un procédé pour opérer un dispositif de chauffage pour un véhicule dans une phase de démarrage, le dispositif de chauffage pour un véhicule comprenant :
- une section de brûleur (12) pour la combustion d'un mélange combustible/air,
- une voie d'écoulement des gaz d'échappement (36) le long de laquelle les gaz d'échappement s'écoulent envers une sortie des gaz d'échappement (38),
- un arrangement d'échangeur de chaleur (28) avec un boîtier d'échangeur de chaleur interne (30) et un boîtier d'échangeur de chaleur externe (40), le boîtier d'échangeur de chaleur interne (30) définissant au moins partiellement la voie d'écoulement des gaz d'échappement (36) et le boîtier d'échangeur de chaleur interne (30) définissant avec le boîtier d'échangeur de chaleur externe (40) un espace d'écoulement (46) pour le médium à chauffer, le médium à chauffer entrant dans une zone d'entrée (48) dans l'espace d'écoulement (46) et sortant dans une zone de sortie (50) de l'espace d'écoulement (46),
- un capteur de flamme (54) pour créer un premier paramètre associé à un état de combustion dans la zone de brûleur (12),
- un capteur de surchauffe (56) pour créer un deuxième paramètre associé à une température dans la région du boîtier d'échangeur de chaleur interne (30),
- un capteur de contrôle (58) pour créer un troisième paramètre associé à une température du médium à chauffer,
le capteur de flamme (54) ayant une caractéristique de résistance CTP et le capteur de surchauffe (56) ou/et le capteur de contrôle (58) ayant une caractéristique CTN,
le procédé comprenant les mesures suivantes :
a) vérifier si le premier paramètre indique une température dans la région du capteur de flamme (54) dépassant un premier seuil de température (T₁),
b) si le premier paramètre indique une température dans la région du capteur de flamme (54) dépassant le premier seuil de température (T₁), effectuer un test de vérification du fonctionnement du capteur de surchauffe (56) ou/et du capteur de contrôle (58) avant ou durant le démarrage de l'opération de combustion,
c) si le premier paramètre indique une température dans la région du capteur de flamme (54) ne dépassant pas le premier seuil de température (T₁), démarrer l'opération de combustion sans effectuer un test de vérification du fonctionnement du capteur de surchauffe (56) ou/et du capteur de contrôle (58).

2. Le procédé selon la revendication 1,
**caractérisé par** la mesure c) comprenant, après le démarrage de l'opération de combustion, la vérification si le premier paramètre indique une température dans la région du capteur de flamme (54) dépassant un deuxième seuil de température (T₂), ensuite, si le premier paramètre indique une température dans la région du capteur de flamme (54) dépassant le deuxième seuil de température (T₂), le test de vérification du fonctionnement du capteur de surchauffe (56) ou/et du capteur de contrôle (58) est effectué.

3. Le procédé selon la revendication 2,
**caractérisé en ce que** si une certaine période après le démarrage de l'opération de combustion le premier paramètre n'indique pas une température dans la région du capteur de flamme (54) dépassant le deuxième seuil de température (T₂), la présence d'une panne est détectée.

4. Le procédé selon la revendication 2 ou 3,
**caractérisé par** le deuxième seuil de température (T₂) étant plus élevé que le premier seuil de température (T₁).

5. Le procédé selon une des revendications 1 à 4,
**caractérisé par** le test de vérification du fonctionnement du capteur de surchauffe (56) comprenant la vérification si le deuxième paramètre indique une température dans la région du capteur de surchauffe (56) dépassant un troisième seuil de température (T₃), ensuite, si le deuxième paramètre n'indique pas une température dans la région du capteur de surchauffe (56) dépassant le troisième seuil de température (T₃), la présence d'une panne est détectée.

6. Le procédé selon la revendication 3 et la revendication 5,
**caractérisé par** le troisième seuil de température (T₃) étant moins élevé ou égal au premier seuil de température (T₁) ou au deuxième seuil de température (T₂).

7. Le procédé selon une des revendications 1 à 5,
**caractérisé par** le test de vérification du fonctionnement du capteur de contrôle (58) comprenant la vérification si le troisième paramètre indique une température dans la région du capteur de contrôle (58) dépassant un quatrième seuil de température (T₄), ensuite, si le troisième paramètre n'indique pas une température dans la région du capteur de contrôle (58) dépassant le quatrième seuil de température (T₄), la présence d'une panne est détectée.

8. Le procédé selon la revendication 5 et la revendication 7,
**caractérisé par** le quatrième seuil de température (T₄) étant moins élevé ou égal au troisième seuil de température (T₃).

9. Le procédé selon une des revendications précédentes,
**caractérisé en ce que** si le test de vérification du fonctionnement ne conduise pas à détecter une panne, un seuil de surchauffe est activé et une vérification est effectuée pour voir si le deuxième paramètre indique une température dans la région du capteur de surchauffe (56) dépassant le seuil de surchauffe, ensuite, si le deuxième paramètre indique une température dans la région du capteur de surchauffe (56) dépassant le seuil de surchauffe, la présence d'une panne est détectée.

10. Le procédé selon une des revendications précédentes,
**caractérisé en ce que** si le test de vérification du fonctionnement ne conduise pas à détecter une panne, un seuil de différence pour la différence entre une température dans la région du capteur de surchauffe (56) indiquée par le deuxième paramètre et une température dans la région du capteur de contrôle (58) indiquée par le troisième paramètre est activé et une vérification est effectuée pour voir si la différence dépasse le seuil de différence, ensuite, si la vérification indique que le seuil de différence est dépassé, la présence d'une panne est détectée.
